# EUROPÄISCHE PATENTSCHRIFT

(11) **EP 0 859 794 B1**
(45) Veröffentlichungstag und Bekanntmachung des Hinweises auf die Patenterteilung: **14.03.2001**
(21) Anmeldenummer: 96938046.8
(22) Anmeldetag: 02.11.1996
(51) Int. Cl.: C08B 30/04, A23J 1/14

(54) **VERWENDUNG UND ANLAGE ZUR GEWINNUNG VON STÄRKE UND PROTEINEN AUS DEM MEHL VON HÜLSENFRÜCHTEN, INSBESONDERE ERBSEN**
PROCESS AND SYSTEM FOR OBTAINING STARCH AND PROTEINS FROM THE FLOUR OF LEGUMES, IN PARTICULAR PEAS
PROCEDE ET INSTALLATION DE PRODUCTION D'AMIDON ET DE PROTEINES A PARTIR DE FARINE DE LEGUMES SECS, NOTAMMENT DE POIS

(30) Priorität: 10.11.1995 DE 19542030
(43) Veröffentlichungstag der Anmeldung: 26.08.1998
(73) Patentinhaber: Flottweg GmbH, D-84137 Vilsbiburg (DE)
(72) Erfinder: KRIKKEN, Jan, NL-9648 DA Wildervank (NL)
(74) Vertreter: Rucker, Bernd, Dipl.-Ing.
(86) Internationale Anmeldenummer: EP9604766
(87) Internationale Veröffentlichungsnummer: WO9717376

(56) Entgegenhaltungen:
- DD-A- 275 909
- DE-A- 2 922 247
- DE-A- 4 301 587
- US-A- 3 813 297
- ABSTRACT BULLETIN OF THE INSTITUTE OF PAPER CHEMISTRY, Bd. 36, Nr. 2, 1.August 1965, APPLETON US, Seite 170 XP002025157 ZAJAC P. ET AL.: "The akaline method for the preparation of wheat starch"

## Beschreibung

Die Erfindung bezieht sich auf ein Verfahren zur Gewinnung von Stärke und Proteinen aus dem Mehl von Hülsenfrüchten, insbesondere Erbsen, nach dem Oberbegriff des Anspruches 1. Sie hat auch eine Anlage zur Durchführung dieses Verfahrens zum Gegenstand.

Hülsenfrüchte (Leguminosen), und zwar insbesondere Erbsen, vor allem Markerbsen, weisen einen sehr hohen Amylosegehalt in ihrer Stärke auf. Die aus Erbsen erhaltene Stärke besitzt aufgrund des hohen Amylosegehalts thermoplastische Eigenschaften und kann daher mit den in der Kunststoffverarbeitung üblichen Verfahren zu Formteilen verarbeitet werden. Daneben weisen Erbsen, die einen höheren Amylosegehalt aufweisen, auch einen hohen Anteil an hochwertigen Proteinen auf. Aus Gabriel-Blanke et al "Gewinnung von Erbsenstärke im Technikum-Maßstab" in: Schriftenreihe des Bundesministers für Ernährung, Landwirtschaft und Forsten, Reihe A, Heft 380, S. 239 bis 247, 1990 sowie DE 43 01 586 C2 ist bereits ein Verfahren nach dem Oberbegriff des Anspruchess 1 bekannt. Dabei wird das Erbsenmehl mit der fünffachen Menge einer relativ hoch konzentrierten Natronlauge aufgeschlossen und mit einem Dekanter separiert. Die Feststoffphase des Dekanters wird anschließend nochmals in der fünffachen Menge der hoch konzentrierten Natronlauge suspendiert und erneut einem Dekanter zugeführt. Die Feststoffphase des zweiten Dekanters wird in Wasser suspendiert und die Suspension einem Sieb und einem Strahlwaschsieb zur Faserabtrennung zugeführt.

Die flüssige Phase des ersten und des zweiten Dekanters, welche das Protein enthalten, können zwar zur Proteingewinnung vereinigt werden. Das Protein liegt allerdings in stark verdünnter Form in der relativ hoch konzentrierten Lauge vor. Die Gewinnung der Proteine ist daher bei dem bekannten Verfahren mit einem hohen Kostenaufwand verbunden. Zudem zeichnet sich das bekannte Verfahren durch einen relativ hohen Verbrauch an Lauge und Wasser und damit durch entsprechend hohe Entsorgungskosten aus.

Aufgabe der Erfindung ist es, ein Verfahren und eine Anlage bereitzustellen, mit dem bzw. der aus Hülsenfrüchten, insbesondere Erbsen, sowohl Stärke hoher Reinheit, wie Proteine mit hoher Ausbeute kostensparend erhalten werden können.

Dies wird erfindungsgemäß mit dem im Anspruch 1 gekennzeichneten Verfahren bzw. der im Anspruch 19 gekennzeichneten Anlage erreicht. In den Unteransprüchen sind vorteilhafte Ausgestaltungen des erfindungsgemäßen Verfahrens und der erfindungsgemäßen Anlage wiedergegeben.

Erbsen und andere Hülsenfrüchte enthalten Stärke, Eiweiß (Proteine) und Fasern (Zellwände, Schalen) neben löslichen Komponenten wie Zucker und Mineralien.

Die Proteine werden durch das wässrige Aufschlußmittel aus dem Erbsenmehl extrahiert. Dazu wird das Mehl mit dem wässrigen Aufschlußmittel angemaischt und dann dem ersten Abschnitt einer Prozeßlinie zugeführt, welcher aus mehreren Fest-Flüssig-Trennstufen besteht. Die Feststoffphase, die zwischen den Fest-Flüssig-Trennstufen abgetrennt wird, wird jeweils einem Behälter zugeführt, in dem sie in dem wässrigen Aufschlußmittel erneut suspendiert wird. Die von der letzten Fest-Flüssig-Trennstufe des ersten Abschnitts der Prozeßlinie abgetrennte Feststoffphase wird einem Behälter zugeführt, in dem sie in Wasser suspendiert wird. Diese Suspension wird dann dem zweiten Abschnitt der Prozeßlinie zugeführt, in dem die Fasern von der Stärke abgetrennt werden. Zur Abtrennung der von den Proteinen und den Fasern befreiten Stärke von der flüssigen Phase weist der zweite Abschnitt am Ende wenigstens eine Fest-Flüssig-Trennstufe auf.

Nach der Erfindung wird zur Bildung des wässrigen, Aufschlußmittels ein alkalisches Konzentrat verwendet, das mit der flüssigen Phase der Fest-Flüssig-Trennstufe des zweiten Abschnitts der Prozeßlinie vermischt wird. Das so gebildete wässrige Aufschlußmittel wird dann dem ersten Abschnitt der Prozeßlinie zwischen dessen erster und letzter Fest-Flüssig-Trennstufe zugeführt.

Von dort wird das wässrige Aufschlußmittel dann im Gegenstrom über die Fest-Flüssig-Trennstufen des ersten Abschnitts zu dem Behälter zurückgeführt, in dem aus dem Erbsenmehl die Maische hergestellt wird, welche der ersten Fest-Flüssig-Trennstufe des ersten Abschnitts zugeführt wird.

Dazu wird die von der jeweils nachgeordneten Fest-Flüssig-Trennstufe des ersten Abschnitts abgetrennte flüssige Phase, zum Suspendieren der der vorgeordneten Fest-Flüssig-Trennstufe zugeführten Feststoffphase zurückgeführt, wobei die von der zweiten Fest-Flüssig-Trennstufe des ersten Abschnitts abgetrennte flüssige Phase zum Suspendieren, also Anmaischen des Erbsenmehls zurückgeführt wird, das der vorgeordneten, also ersten Fest-Flüssig-Trennstufe zugeführt wird. Die Proteine werden dadurch in der flüssigen Phase der ersten Fest-Flüssig-Trennstufe des ersten Abschnitts aufkonzentriert. Durch Abführung der flüssigen Phase der ersten Fest-Flüssig-Trennstufe des ersten Abschnitts zu einer Nebenprozeßlinie können damit die Proteine mit hoher Ausbeute kostensparend gewonnen werden.

Zugleich wird durch die Gegenstromführung des wässrigen Aufschlußmittels in dem ersten Abschnitt der Prozeßlinie und die Verwendung der flüssigen Phase der Fest-Flüssig-Trennstufe des zweiten Abschnitts der Prozeßlinie zur Zubereitung des wässrigen Aufschlußmittels bei geringem Verbrauch an alkalischem Konzentrat eine Stärke mit einem extrem niedrigen Eiweißgehalt erhalten.

Die Erbsen oder sonstigen Hülsenfrüchte werden vorzugsweise trockengemahlen, um die Schalen beim Mahlen abzutrennen. Das Mehl weist vorzugsweise eine Teilchengröße von weniger als 200 µm auf. Zwar werden durch sehr feines Mahlen die Zellstrukturen vollständiger aufgebrochen, durch eine sehr feine Mahlung gelangt jedoch fein gemahlene Faser in das Stärke-Endprodukt.

Das Hülsenfruchtmehl wird mit dem wässrigen Aufschlußmittel vorzugsweise höchstens zwei Stunden, insbesondere höchstens eine Stunde angemaischt. Andernfalls kann das lösliche Eiweiß in unlösliche Produkte übergeführt werden, die die gewonnene Stärke verunreinigen und die Proteinausbeute herabsetzen.

Zum Anmaischen werden vorzugsweise mehrere, beispielsweise zwei Behälter verwendet, in denen das Erbsenmehl nacheinander angemaischt wird. Während in dem einen Behälter gemaischt wird, wird die Maische des anderen Behälters der ersten Fest-Flüssig-Trennstufe des ersten Abschnitts der Prozeßlinie zugeführt. Auch kann der andere Behälter nach dem Entleeren der Maische beispielsweise durch Spülen mit Wasser gereinigt werden, bevor in ihm die nächste Maische angerührt wird.

Zum Anmaischen werden 2 bis 4 Gew.-Teile, vorzugsweise etwa 3 Gewichtsteile des wässrigen Aufschlußmittels mit einem Gewichtsteil Erbsenmehl vermischt. Damit liegt eine relativ hohe Konzentration an Erbsenmehl in der Maische vor. Die Temperatur der Maische beträgt vorzugsweise 25 bis 35 °C.

Um die Prozeßdynamik zu verbessern, ist zwischen den Anmaischbehältern und der ersten Fest-Flüssig-Trennstufe des ersten Abschnitts der Prozeßlinie ein Pufferbehälter zur Aufnahme der Maische vorgesehen.

Das aus dem alkalischen Konzentrat und der in dem zweiten Abschnitt von der Stärke abgetrennten flüssigen Phase gebildete wässrige Aufschlußmittel wird dem ersten Abschnitt der Prozeßlinie vorzugsweise zwischen der vorletzten und der letzten Fest-Flüssig-Trennstufe zugeführt, also dem Behälter, in dem der Feststoff suspendiert wird, der von der vorletzten Fest-Flüssig-Trennstufe abgetrennt worden ist. Wenn der erste Abschnitt beispielsweise aus drei Fest-Flüssig-Trennstufen besteht, wird das wässrige Aufschlußmittel der Prozeßlinie also über den Behälter zugeführt, in dem der von der zweiten Fest-Flüssig-Trennstufe abgetrennte Feststoff suspendiert wird.

Als alkalisches Konzentrat wird vorzugsweise Natriumhydroxid verwendet. Es kann jedoch auch jede andere Lauge verwendet werden, ebenso ein Amin oder ein Salz aus einer starken Base und einer schwachen Säure. Wesentlich ist lediglich, daß das alkalische Konzentrat eine so hohe Alkalität aufweist, daß die Feststoffsuspension, der das alkalische Konzentrat zugeführt wird, einen pH-Wert von vorzugsweise 8 - 11, insbesondere 9 - 10 aufweist.

Das alkalische Konzentrat, vorzugsweise eine wässrige Lösung, enthält das Natriumhydroxid oder sonstige alkalische Aufschlußmittel vorzugsweise in einer Konzentration von 5 bis 20 Gew.-%.

Das alkalische Konzentrat wird mit der flüssigen Phase der Fest-Flüssig-Trennstufe des zweiten Abschnitts der Prozeßlinie verdünnt, um das wässrige Aufschlußmittel zu bilden. Die Verdünnung erfolgt vorzugsweise vor Zugabe des Konzentrats zu der Prozeßlinie. Gegebenenfalls können das Konzentrat und die flüssige Phase der Fest-Flüssig-Trennstufe des zweiten Abschnitts jedoch auch an unterschiedlichen Stellen zwischen der ersten und der letzten Fest-Flüssig-Trennstufe des ersten Abschnitts der Prozeßlinie zugegeben werden.

Bei Verwendung einer Lauge beträgt deren Konzentration in dem Aufschlußmittel vorzugsweise weniger als 10 mmol/l, insbesondere etwa 6 mmol/l, nach der Verdünnung mit der flüssigen Phase der Fest-Flüssig-Trennstufe des zweiten Abschnitts der Prozeßlinie.

Da die Konzentration der Proteine in der Feststoffphase von Fest-Flüssig-Trennstufe zu Fest-Flüssig-Trennstufe in dem ersen Abschnitt abnimmt, ist zur Extraktion der letzten Proteinreste aus dem Feststoff vor der letzten Fest-Flüssig-Trennstufe des ersten Abschnitts der Prozeßlinie ein Reaktionsbehälter vorgesehen, der die Suspension aufnimmt, die aus der von der vorletzten Fest-Flüssig-Trennstufe des ersten Abschnitts abgetrennten Feststoffphase gebildet wird, wobei diese Suspension, wie vorstehend erwähnt, zugleich vorzugsweise mit dem aus dem alkalischen Konzentrat und der flüssigen Phase der Fest-Flüssig-Trennstufe des zweiten Abschnitts der Prozeßlinie gebildeten frischen Aufschlußmittel angemacht wird. Die Verweilzeit der Suspension in dem Reaktionsbehälter beträgt vorzugsweise 10 bis 60 Minuten.

Die Fest-Flüssig-Trennstufen des ersten Abschnitts und der Fest-Flüssig-Trennstufe oder -stufen des zweiten Abschnitts der Prozeßlinie können in beliebiger Weise ausgebildet und kombiniert sein, beispielsweise als Siebe, Filter, Siebzentrifugen oder Absetzbehälter. Vorzugsweise werden als Fest-Flüssig-Trennstufen jedoch Zentrifugal-Separatoren oder Hydrozyklone verwendet, wobei als Zentrifugal-Separatoren insbesondere Dekanter eingesetzt werden. Dabei kann eine Fest-Flüssig-Trennstufe auch durch eine Hydrozyklonbatterie gebildet sein.

Der pH-Wert des wässrigen Aufschlußmittels nimmt von dem Behälter, über dem das alkalische Konzentrat der Prozeßlinie zugeführt wird, im Gegenstrom zur Maische ab. So beträgt der pH-Wert in dem Behälter, in dem die Feststoffphase mit dem alkalischen Konzentrat und dem im zweiten Abschnitt der Prozeßlinie von der Stärke abgetrennten flüssigen Phase suspendiert wird, vorzugsweise 9 bis 10, in dem Behälter, in dem die Feststoffphase suspendiert wird, die in der vorgeordneten Fest-Flüssig-Trennstufe abgetrennt worden ist, z.B. 6 bis 8, und in dem Behälter, in dem das Hülsenfruchtmehl angemaischt wird, 5 bis 7,5. Der pH-Wert in dem Reaktionsbehälter beträgt vorzugsweise 7,5 bis 9.

Vorzugsweise weist der erste Abschnitt der Prozeßlinie drei Fest-Flüssig-Trennstufen auf; es können jedoch auch vier oder mehr, oder auch nur zwei Fest-Flüssig-Trennstufen im ersten Abschnitt vorgesehen sein.

Bei dem erfindungsgemäßen Verfahren fallen die Proteine in der flüssigen Phase der ersten Fest-Flüssig-Trennstufe des ersten Abschnitts der Prozeßlinie in hoher Konzentration an, was unter anderem die hohe Proteinausbeute des erfindungsgemäßen Verfahrens bedingt.

Auf der anderen Seite führt die hohe Proteinkonzentration zu einer entsprechend hohen Viskosität der flüssigen Phase in der ersten Fest-Flüssig-Trennstufe des ersten Abschnitts der Prozeßlinie, wodurch die Trennung der Feststoffphase von der flüssigen Phase erschwert wird, also Stärke und Fasern in die flüssige Phase geschleppt werden und damit das Protein verunreinigen können. Demgemäß sollte die Viskosität der flüssigen Phase der ersten Fest-Flüssig-Trennstufe des ersten Abschnitts der Prozeßlinie höchstens 500 cP, vorzugsweise 20 bis 200 cP betragen.

Von der Hauptprozeßlinie zweigt eine Nebenprozeßlinie ab, der die flüssige Phase der ersten Fest-Flüssig-Trennstufe des ersten Abschnitts der Hauptprozeßlinie zur Abtrennung der Proteine zugeführt wird. Dazu werden die in dem wässrigen Aufschlußmittel gelösten Proteine durch Säurezugabe koaguliert. Das Minimum der Löslichkeit der Proteine von Hülsenfrüchten, insbesondere Erbsen, liegt bei einem pH-Wert von 3,5 bis 5, insbesondere 4,0 bis 4,7, und zwar bei einer Temperatur der Lösung von 30 bis 90°C, insbesondere 60 bis 80°C.

Ähnlich wie bei der Kristallisation werden auch bei der Koagulation dann große koagulierte Teilchen gebildet, wenn der Koagulationsvorgang langsam abläuft. Ein Koagulat aus größeren Teilchen ist von der flüssigen Phase leichter trennbar, wodurch die Proteinausbeute erhöht und die Kosten der Proteintrocknung herabgesetzt werden.

Vorzugsweise werden daher zur Koagulation der Proteine drei Behälter verwendet, die jeweils eine Zuführung für die Säure zur Koagulation der Proteine aufweisen. Die drei Behälter sind dabei getrennt mit flüssiger Phase füllbar, mit der Säure versetzbar bzw. entleerbar ausgebildet.

Die Füll-, Verweil- bzw. Entleerzeit der drei Behälter beträgt vorzugsweise mindestens eine Stunde, insbesondere mindestens zwei Stunden. Zum Füllen mit der flüssigen, die Proteine enthaltenden Phase der ersten Fest-Flüssig-Trenn-Stufe des ersten Abschnitts der Hauptprozeßlinie wird der eine, erste Behälter vorzugsweise zunächst erst teilweise, beispielsweise halb gefüllt, und dann die Säure zudosiert, während der Rest eingefüllt wird. Die Dosiergeschwindigkeit der Säure ist vorzugsweise so bemessen, daß der gewünschte pH-Wert zur Koagulation der Proteine, also beispielsweise von 4,3 bis 4,4 dann erreicht wird, wenn der Behälter gefüllt ist.

Wenn der erste Behälter gefüllt ist, wird die flüssige, die Proteine enthaltende Phase der ersten Fest-Flüssig-Trennstufe des ersten Abschnitts der Hauptprozeßlinie dem nächsten Behälter zugeführt. In dem gefüllten ersten Behälter wird unterdessen das Koagulat vorzugsweise mindestens eine, insbesondere mindestens zwei Stunden reifen gelassen, wobei die Temperatur des Behälters in diesem Zeitraum langsam erhöht wird, beispielsweise von 50°C auf 80°C. Zum Entleeren des ersten Behälters, also zur Verarbeitung des gereifen Koagulats steht dann ein entsprechend langer Zeitraum zur Verfügung.

Zur Verarbeitung wird das Koagulat in der Nebenprozeßlinie einer Fest-Flüssig-Trennstufe zugeführt, in der die koagulierten Proteine abgetrennt werden. Die von der Fest-Flüssig-Trennstufe abgetrennte flüssige Phase wird vorzugsweise einem Sedicanter (eingetragene deutsche Marke Nr. 2058639 der Firma Flottweg GmbH) zugeführt, mit dem sie in eine schwere und eine leichte flüssige Phase getrennt wird. Die vom Sedicanter (eingetragene Marke) abgetrennte leichte Phase enthält die nicht koagulierbaren gelösten Komponenten des Hülsenfruchtmehls und kann eingedampft werden. Die von der Fest-Flüssig-Trennstufe abgetrennte Feststoffphase wird einem Eiweißtrockner zugeführt.

Die in Wasser suspendierte, von der letzten Fest-Flüssig-Trennstufe des ersten Abschnitts der Hauptprozeßlinie abgetrennte Feststoffphase wird nacheinander vorzugsweise mehreren, beispielsweise zwei Strahlwaschsieben zugeführt, um die Fasern von der Stärke zu trennen.

Die flüssigen Phasen der Strahlwaschsiebe, die die Stärke enthalten, werden wenigstens einer Fest-Flüssig-Trennstufe zugeführt, beispielsweise einem Dekanter, um die Stärke als Feststoffphase abzutrennen, die dann mit einem Stärketrockner getrocknet wird.

Die flüssige Phase der Fest-Flüssig-Trennstufe des zweiten Abschnitts der Prozeßlinie wird vorzugsweise teilweise der Feststoffphase des ersten Strahlwaschsiebes zugesetzt, welche dem zweiten Strahlwaschsieb zugeführt wird. Ein Teil der flüssigen Phase der Fest-Flüssig-Trennstufe des zweiten Abschnitts wird also zur Siebung der Fasern benutzt, wodurch die Fest-Flüssig-Trennstufe des zweiten Abschnitts zusätzlich mit Flüssigkeit belastet wird. Durch diese Überlastung verliert die Fest-Flüssig-Trennstufe des zweiten Abschnitts der Prozeßlinie an sich Feststoff an die flüssige Phase. Jedoch geht in die flüssige Phase nur die am schlechtesten abtrennbare Fraktion des Feststoffs verloren, die die feinste, nicht abgesiebte Faserfraktion enthält. Diese Fraktion wird dadurch nochmals gesiebt, so daß schließlich auch die feinsten Fasern zurückgehalten werden.

In der Hauptprozeßlinie wird ab der ersten Fest-Flüssig-Trennstufe vorzugsweise mit einer Temperatur von 15 bis 45°C, insbesondere 25-35°C gearbeitet.

Mit dem erfindungsgemäßen Verfahren kann der Proteingehalt in der als Endprodukt gewonnenen Stärke auf 0,5 %, vorzugsweise 0,25 und weniger reduziert werden. Zugleich kann mit dem erfindungsgemäßen Verfahren eine Proteinausbeute von 75 % und mehr erreicht werden, bezogen auf den im Hülsenfruchtmehl enthaltenen Stickstoffgehalt.

Der Verbrauch an dem alkalischen Aufschlußmittel, beispielsweise Natronlauge pro Tonne Hülsenfruchtmehl beträgt lediglich etwa 1 Kilogramm, bezogen auf das feste Aufschlußmittel, und der Wasserverbrauch lediglich etwa 4 m³.

Nachstehend ist eine Ausführungsform einer Anlage zur Durchführung des erfindungsgemäßen Verfahrens anhand eines Fließschemas beispielsweise beschrieben.

Die Anlage weist eine Prozeßlinie aus einem ersten Abschnitt I mit drei Dekantern 6, 9 und 10 als Fest-Flüssig-Trennstufen sowie einem zweiten Abschnitt II auf.

Das in einem nicht dargestellten Mahl- und Siebverfahren hergestellte Erbsenmehl E wird nacheinander zwei Anmaischbehältern 1 und 2 durchgeführt, die jeweils mit Rührern ausgestattet sind.

Dem Erbsenmehl in den Anmaischbehältern 1 und 2 wird wechselweise als wässriges Aufschlußmittel über eine Leitung 3 die flüssige Phase des zweiten Dekanters 9 zugeführt, wobei das angemaischte Erbsenmehl nach einer definierten Anmaischzeit aus dem betreffenden Behälter 1 bzw. 2 über eine Leitung 4 einem mit einem Rührwerk versehenen ersten Pufferbehälter 5 zugeführt wird, von dem es in kontinuierlichem Strom zu dem ersten Dekanter 6 gefördert wird. Das Erbsenmehl weist nach dem Anmaischen einen pH-Wert von 5 bis 7,5 auf.

Im ersten Dekanter 6 wird eine flüssige Proteinphase von einer Stärke und Fasern enthaltenden Feststoffphase abgetrennt.

Die flüssige Proteinphase, die neben den Proteinen auch sämtliche anderen in Wasser löslichen Bestandteile des Erbsenmehles enthält, wird über die Leitung 7 einer Nebenprozeßlinie zugeführt, in der die Proteine durch Koagulation gewonnen werden.

Die im ersten Dekanter 6 abgetrennte Stärke und Fasern enthaltende Feststoffphase wird in einen zweiten Pufferbehälter 8 geleitet und dort über die Leitung 16 mit flüssiger Phase vermischt, die von dem dritten Dekanter 10 abgetrennt wird.

Die Feststsoffsuspension in em zweiten Pufferbehälter weist einen pH-Wert von 6 bis 8 auf.

Die im zweiten Dekanter 9 abgetrennte, Stärke und Fasern enthaltende Feststoffphase wird in einen dritten Pufferbehälter 12 geleitet und dort mit dem wässrigen alkalischen Aufschlußmittel vermischt, das aus dem flüssigen alkalischen Konzentrat B, z.B. Natronlauge, gebildet wird, das über die Leitung lla mit flüssiger Phase aus dem Dekanter 11 des zweiten Abschnitts II der Prozeßlinie verdünnt wird. Die in dem Pufferbehälter 12 suspendierte Feststoffphase gelangt über die Leitung 13 in den Reaktionsbehälter 14, in dem sie einer definierten Reaktionszeit ausgesetzt wird, in der das restliche Eiweiß in Lösung geht. Der pH-Wert der Suspension in dem dritten Pufferbehälter 12 beträgt 9 bis 10, und in dem Reaktionsbehälter 14 7,5 bis 9.

Die ausreagierte Suspension wird aus dem Reaktionsbehälter über die Leitung 15 dem dritten Dekanter 10 zugeführt. Die darin abgetrennte flüssige Phase wird über die Leitung 16 dem zweiten Pufferbehälter 8 zugeführt. Die im dritten Dekanter 10 abgetrennte, Stärke und Fasern enthaltene Feststoffphase wird in einen vierten Pufferbehälter 17 geleitet, in dem sie durch Zufuhr von Wasser über eine Leitung 18 suspendiert wird.

Bei dem erfindungsgemäßen Verfahren wird also das alkalische Konzentrat B zur Bildung des wässrigen Aufschlußmittels mit der flüssigen Phase der Fest-Flüssig-Trennstufe des zweiten Abschnitts II der Prozeßlinie, also des Dekanters 11, vermischt, und das so gebildete wässrige Aufschlußmittel dem ersten Abschnitt I der Prozeßlinie zwischen dessen erster und letzter Fest-Flüssig-Trennstufe, also zwischen dem zweiten Dekanter 9 und dem dritten Dekanter 10 zugeführt.

Die von der jeweils nachgeordneten Fest-Flüssig-Trennstufe des ersten Abschnitts I, also dem dritten Dekanter 10 bzw. dem zweiten Dekanter 9 abgetrennte flüssige Phase wird im Gegenstrom über die Leitung 16 bzw. 3 zurückgeführt, um die Feststoffphase zu suspendieren, die der jeweils vorgeordneten Fest-Flüssig-Trennstufe, also dem zweiten Dekanter 9 bzw. dem ersten Dekanter 6 zugeführt wird. Die suspendierte Feststoffphase, die dem ersten Dekanter 6 zugeführt wird, wird dabei durch das Erbsenmehl E gebildet.

In einem vierten Pufferbehälter 17 wird die Stärke und Fasern enthaltende Feststoffphase des dritten Dekanters 10 in Wasser suspendiert. Die Suspension in dem vierten Pufferbehälter 17 weist einen pH-Wert von 7 bis 8,5 auf.

Um die Fasern von der Stärke zu trennen, wird die Suspension von dem vierten Pufferbehälter 17 über die Leitung llb zu einem ersten Strahlwaschsieb 19 geleitet. Die Feststoffphase des ersten Strahlwaschsiebs 19, die über die Leitung 20 abgezogen wird und im wesentlichen aus den Fasern besteht, wird über die Leitung 20a mit einem Teil der flüssigen Phase des Dekanters 11 des zweiten Abschnitts II suspendiert und einem zweiten Strahlwaschsieb 21 zugeführt, um Stärkereste von den Fasern zu trennen. Die Feststoffphase des zweiten Strahlwaschiebs 21, welche über die Leitung 21b abgezogen wird, bildet die Faserfraktion.

Die Waschdüsen des zweiten Strahlwaschsiebes 21 werden über eine Leitung 18a mit Frischwasser aus der Leitung 18 gespeist. Der Siebdurchgang des zweiten Strahlwaschsiebes 21 wird über eine Leitung llc als Düsenwasser den Waschdüsen des ersten Strahlwaschsiebes 19 zugeführt.

Der Siebdurchgang des ersten Strahlwaschsiebes 19, der über die Leitung 19a abgezogen wird, enthält nahezu die gesamte auswaschbare Stärke. Er wird mit einem Schwing- oder Flachsieb 22 nochmals gesiebt, um alle Fasern aus der Stärkesuspension abzutrennen. Das Sieb 22 stellt also eine Art Sicherheitseinrichtung dar, falls die Siebung durch die Strahlwaschsiebe 19 und 21 zu wünschen übrig läßt. Der Siebrückstand des Siebes 22, also die Fasern, wird über die Leitung 22b abgezogen, und mit der über die Leitung 21b abgezogenen Faserfraktion vereinigt.

Die mit dem Sieb 22 abgetrennte, faserfreie Stärkesuspension wird über die Leitung 22 a dem Dekanter 11 zugeführt. In dem Dekanter 11 wird die Stärke als Feststoffphase abgetrennt, die nach dem Trocknen in einem Stärketrockner 30 das eine Hauptprodukt des erfindungsgemäßen Verfahrens bildet.

Etwaige dem Dekanter 11 zugeführte Proteinrestbestandteile werden als flüssige Phase des Dekanters 11 über die Leitung lla im Gegenstrom zum Pufferbehälter 12 des ersten Abschnitts I der Prozeßlinie zurückgeführt.

Da ein Teil der flüssigen Phase des Dekanters 11 für die Siebung der Fasern benutzt wird, ist der Dekanter 11 an sich mit Flüssigkeit überlastet. Dies ist jedoch von Vorteil, da damit die feinste Faserfraktion im Siebdurchgang des Siebes 22 den Sieben 19, 21 und 22 nochmals zugeführt wird.

Die von der ersten Flüssig-Fest-Trennstufe des ersten Abschnitts I, also dem ersten Dekanter 6 über die Leitung 7 abgetrennte flüssige Phase enthält nahezu sämtliche Proteinbestandteile des Erbsenmehls in gelöster Form.

Die in der flüssigen Phase, also in dem wässrigen alkalischen Aufschlußmittel gelösten Proteine werden durch Koagulieren abgetrennt.

Dazu sind drei Behälter 23, 24 und 25 vorgesehen, die wechselweise mit der proteinhaltigen alkalischen flüssigen Phase in der Leitung 7 gefüllt werden. Über eine Leitung 7a kann den drei Behältern 23, 24 und 25, die aufheizbar ausgebildet sind, eine Säure, beispielsweise Schwefelsäure zugeführt werden.

Dabei wird so vorgegangen, daß beispielsweise der erste Behälter 23 zunächst teilweise über die Leitung 7 mit der alkalischen Proteinlösung gefüllt wird. Dann wird weiter gefüllt, wobei gleichzeitig in den Behälter 23 über die Leitung 7a Säure zudosiert wird, und zwar mit einer solchen Geschwindigkeit, daß der gewünschte End-pH-Wert von beispielsweise 4,3 bis 4,4 erreicht wird, wenn der Behälter 23 gefüllt ist. Alsdann wird der nächste Behälter, beispielsweise der Behälter 24 über die Leitung 7 mit der alkalischen Proteinlösung gefüllt.

Der volle erste Behälter 23 wird unterdessen von beispielsweise 55 bis 65 ° innerhalb einer vorgegebenen Zeit, von beispielsweise 2 Stunden, auf eine Temperatur von 70 bis 80° C erwärmt, um das Koagulat im Behälter 23 reifen zu lassen. Nach dem Reifen des Koagulats wird der Behälter 23 über die Leitung 26 entleert, um das darin enthaltene Koagulat innerhalb des vorgegebenen Zeitraums weiterzuverarbeiten.

Dazu wird das Koagulat einer Fest-Flüssig-Trennstufe, beispielsweise einem Dekanter 27 zugeführt. Die vom Dekanter 27 abgetrennte feste Phase, die den Hauptanteil an Proteinen bzw. Eiweiß enthält, wird dem Eiweißtrockner 29 zugeführt. Die flüssige Phase der Fest-Flüssig-Trennstufe bzw. des Dekanters 27 wird über eine Leitung 27b einem Sedicanter 28 (eingetragene deutsche Marke Nr. 2058639 der Firma Flottweg GmbH) zugeführt, der die flüssige Phase in eine Phase höherer Dichte und Viskosität und eine Phase niedrigerer Dichte und Viskosität trennt.

Die im Sedikanter 28 (eingetragenes Warenzeichen) abgetrennte Phase höherer Dichte enthält noch Proteine. Diese Phase wird zusammen mit der vom Dekanter 27 abgetrennten Proteinfeststoffphase über ein Förderband 28a dem Eiweißtrockner 29 zugeführt.

Das über die Leitung 28b abgetrennte Prozeßwasser kann in einer Aufbereitungsanlage z.B. eingedampft und als Viehfutter verwendet werden.

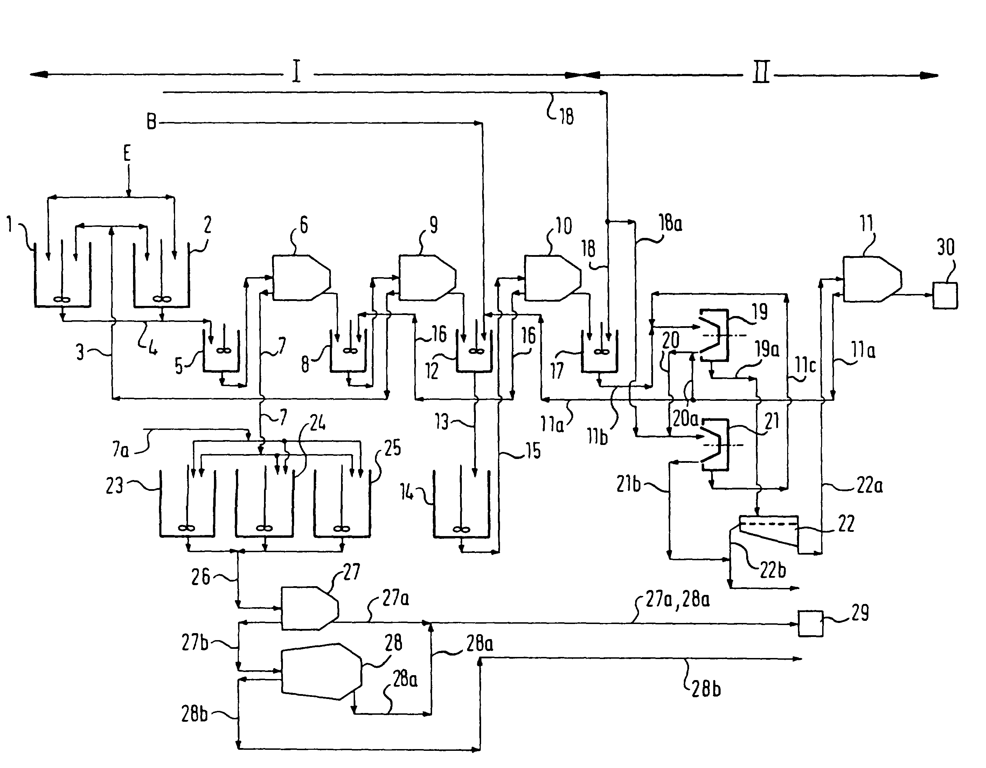

## Patentansprüche

1. Verfahren zur Gewinnung von Stärke und Proteinen aus dem Mehl von Hülsenfrüchten, bei dem das mit einem wässrigen Aufschlußmittel angemaischte Hülsenfruchtmehl einem ersten Abschnitt (I) einer Prozeßlinie mit mehreren Fest-Flüssig-Trennstufen (6, 9, 10) zur Extraktion der Proteine und anschließend die in Wasser suspendierte Feststoffphase der letzten Fest-Flüssig-Trennstufe (10) des ersten Abschnitts (I) einem zweiten Abschnitt (II) der Prozeßlinie mit wenigstens einer Trennstufe (19, 21, 22) zum Abtrennen der Fasern von der Stärke und wenigstens einer Fest-Flüssig-Trennstufe (11) zum Abtrennen der Stärke von der flüssigen Phase kontinuierlich zugeführt wird, dadurch gekennzeichnet, daß das wässrige Aufschlußmittel aus einem alkalischen Konzentrat (B) und der im zweiten Abschnitt (II) der Prozeßlinie von der Stärke abgetrennten flüssigen Phase gebildet wird und das alkalische Konzentrat (B) und die im zweiten Abschnitt (II) der Prozeßlinie von der Stärke abgetrennte flüssige Phase dem ersten Abschnitt (I) der Prozeßlinie zwischen dessen erster und letzter Fest-Flüssig-Trennstufe (6 bzw. 10) zugeführt wird, wobei die von der jeweils nachgeordneten Fest-Flüssig-Trennstufe (9, 10) des ersten Abschnitts (I) abgetrennte flüssige Phase zum Suspendieren der der vorgeordneten Fest-Flüssig-Trennstufe (6, 9) zugeführten Feststoffphase im Gegenstrom zurückgeführt wird und die von der ersten Fest-Flüssig-Trennstufe (6) des ersten Abschnitts (I) abgetrennte flüssige Phase aus der Prozeßlinie zur Abtrennung der Proteine abgeführt wird.

2. Verfahren nach Anspruch 1, dadurch gekennzeichnet, daß das der Prozeßlinie zugeführte Hülsenfruchtmehl in mehreren Behältern (1, 2) nacheinander angemaischt wird.

3. Verfahren nach Anspruch 1 oder 2, dadurch gekennzeichnet, daß das Hülsenfruchtmehl in einem Verhältnis von 2 bis 4 Gew.-Teile wässriges Aufschlußmittel je Gewichtsteil Hülsenfruchtmehl angemaischt wird.

4. Verfahren nach einem der vorstehenden Ansprüche, dadurch gekennzeichnet, daß das alkalische Konzentrat (B) zwischen der vorletzten und der letzten Fest-Flüssig-Trennstufe (9 und 10) des ersten Abschnitts (I) der Prozeßlinie zugeführt wird.

5. Verfahren nach einem der vorstehenden Ansprüche, dadurch gekennzeichnet, daß das wässrige Aufschlußmittel zwischen der vorletzten und der letzten Fest-Flüssig-Trennstufe (9, 10) des ersten Abschnitts (I) der Prozeßlinie einen pH-Wert von 8 bis 11 aufweist.

6. Verfahren nach einem der vorstehenden Ansprüche, dadurch gekennzeichnet, daß als alkalisches Konzentrat (B) eine wässrige Natronlauge-Lösung verwendet wird.

7. Verfahren nach Anspruch 6, dadurch gekennzeichnet, daß die Konzentration der Natronlauge in dem wässrigen Aufschlußmittel zwischen der vorletzten und der letzten Fest-Flüssig-Trennstufe (9, 10) des ersten Abschnitts (I) weniger als 10 mMol/l beträgt.

8. Verfahren nach einem der vorstehenden Ansprüche, dadurch gekennzeichnet, daß die im zweiten Abschnitt (II) der Prozeßlinie von der Stärke abgetrennte flüssige Phase dem ersten Abschnitt (I) zwischen der vorletzten und der letzten Fest-Flüssig-Trennstufe (9, 10) zugeführt wird.

9. Verfahren nach Anspruch 1, dadurch gekennzeichnet, dass die Stärke und Fasern enthaltende Feststoffphase, vermischt mit dem wässrigen alkalischen Konzentrat und verdünnt mit der im zweiten Abschnitt (II) der Prozeßlinie von der Stärke abgetrennten flüssigen Phase einem Reaktionsbehälter (14) zugeführt wird, um durch Verlängerung der Reaktionszeit die restlichen Proteine in Lösung zu bringen.

10. Verfahren nach Anspruch 9, dadurch gekennzeichnet, daß die Suspension in dem Reaktionsbehälter (14) der letzten Fest-Flüssig-Trennstufe (10) des ersten Abschnitts
(I) der Prozeßlinie zugeführt wird.

11. Verfahren nach einem der vorstehenden Ansprüche, dadurch gekennzeichnet, daß die Viskosität der die Proteine enthaltenden flüssigen Phase der ersten Fest-Flüssig-Trennstufe (6) des ersten Abschnitts (I) höchstens 500 cP beträgt.

12. Verfahren nach einem der vorstehenden Ansprüche, dadurch gekennzeichnet, daß die Proteine zur Abtrennung aus der flüssigen Phase der ersten Fest-Flüssig-Trennstufe (6) des ersten Abschnitts (I) der Prozeßlinie koaguliert werden.

13. Verfahren nach Anspruch 12, dadurch gekennzeichnet, daß die flüssige Phase zur Koagulation der Proteine mit einer Säure versetzt wird.

14. Verfahren nach Anspruch 13, dadurch gekennzeichnet, daß die flüssige Phase mit der Säure auf einem pH-Wert im Bereich von 3,5 bis 5 angesäuert wird.

15. Verfahren nach einem der Ansprüche 12 bis 14, dadurch gekennzeichnet, daß die flüssige Phase zur Koagulation der Proteine erwärmt wird.

16. Verfahren nach Anspruch 14 oder 15, dadurch gekennzeichnet, daß zur Koagulation der Proteine wenigstens ein Behälter (23, 24, 25) vorgesehen ist, der mit der die Proteine enthaltenden flüssigen Phase gefüllt wird, wobei die Säure zum Ansäuern der flüssigen Phase zudosiert wird, sobald der Behälter teilweise gefüllt ist und die Dosierung so durchgeführt wird, daß der gewünschte pH-Wert im Bereich von 3,5 bis 5 bei gefülltem Behälter erreicht wird.

17. Verfahren nach Anspruch 16, dadurch gekennzeichnet, daß mindestens drei Behälter (23, 24, 25) vorgesehen sind, wobei der eine Behälter (23) mit der die Proteine enthaltenden flüssigen Phase gefüllt und zur Koagulation angesäuert wird, während der zweite Behälter (24) zum Reifen des Koagulats stehengelassen und der dritte Behälter (25) entleert wird.

18. Verfahren nach einem der Ansprüche 12 bis 17, dadurch gekennzeichnet, daß wenigstens eine Fest-Flüssig-Trennstufe (27) zur Abtrennung des koagulierten Proteins von der flüssigen Phase vorgesehen ist.

19. Verfahren nach Anspruch 18, dadurch gekennzeichnet, daß die flüssige Phase der Fest-Flüssig-Trennstufe (27) einem Sedicanter (eingetragene Marke der Firma Flottweg GmbH) zugeführt und mit der abgetrennten dichteren Phase des Sedicanters die nicht koagulierten Proteine abgetrennt werden.

20. Verfahren nach einem der vorstehenden Ansprüche, dadurch gekennzeichnet, dass als Hülsenfruchtmehl Erbsenmehl verwendet wird.

21. Anlage zur Durchführung des Verfahrens nach einem der vorstehenden Ansprüche, gekennzeichnet durch eine Vorrichtung zum Anmaischen des Hülsenfruchtmehls mit dem wässrigen Aufschlußmittel, eine Prozeßlinie mit einem ersten Abschnitt (I) mit mehreren Fest-Flüssig-Trennstufen (6, 9, 10) zur Extraktion der Proteine, einem Behälter (17) zum Suspendieren der Feststoffphase der letzten Fest-Flüssig-Trennstufe (10) des ersten Abschnitts (I) in Wasser, einem zweiten Abschnitt (II) der Prozeßlinie mit wenigstens einer Trennstufe (19, 21, 22) zur Abtrennung der Fasern von der Stärke und wenigstens einer Fest-Flüssig-Trennstufe (11) zur Abtrennung der Stärke von der flüssigen Phase, eine Leitung zur Zufuhr eines alkalischen Konzentrats (B) und eine Leitung (lla) zur Zufuhr des im zweiten Abschnitt (II) der Prozeßlinie von der Stärke abgetrennten flüssigen Phase zu dem ersten Abschnitt (I) zwischen dessen ersten Fest-Flüssig-Trennstufe und dessen letzter Fest-Flüssig-Trennstufe (6, 10), jeweils eine Leitung (3, 16) zur Rückführung der von der jeweils nachgeordneten Fest-Flüssig-Trennstufe (9, 10) abgetrennten flüssigen Phase zu dem Behälter (8; 1,2), in dem die Feststoffphase, die der vorgeordneten Fest-Flüssig-Trennstufe (6, 9) zugeführt wird, suspendiert wird, sowie eine Leitung (7) zur Abführung der die Proteine enthaltenden flüssigen Phase der ersten Fest-Flüssig-Trennstufe (7) des ersten Abschnitts (I).

22. Anlage nach Anspruch 21, dadurch gekennzeichnet, daß die Leitung (3) zur Rückführung der von der zweiten Fest-Flüssig-Trennstufe (9) des ersten Abschnitts (I) der Prozeßlinie abgetrennten flüssigen Phase zur Vorrichtung (1, 2) zum Anmaischen des Hülsenfruchtmehls führt.

23. Anlage nach Anspruch 21 oder 22, dadurch gekennzeichnet, daß ein Pufferbehälter (5) zwischen der Vorrichtung zum Anmaischen des Hülsenfruchtmehls und der ersten Fest-Flüssig-Trennstufe (6) des ersten Abschnitts
(I) der Prozeßlinie angeordnet ist.

24. Anlage nach Anspruch 22 oder 23 dadurch gekennzeichnet, daß die Vorrichtung zum Anmaischen mehrere mit dem Hülsenfruchtmehl (E) und dem wässrigen Aufschlußmittel getrennt füll- und entleerbare Behälter (1,2) aufweist.

25. Anlage nach einem der Ansprüche 21 bis 24, dadurch gekennzeichnet, daß die Leitung zur Zufuhr des alkalischen Konzentrats (B) und die Leitung (lla) zur Zufuhr der im zweiten Abschnitt (II) abgetrennten flüssigen Phase zu einem Behälter (12) zum Suspendieren des Feststoffs der vorletzten Fest-Flüssig-Trennstufe (9) des ersten Abschnitts (I) der Prozeßlinie führen.

26. Anlage nach Anspruch 25, dadurch gekennzeichnet, daß ein Reaktionsbehälter (14) zwischen dem Behälter (12) zum Suspendieren der Feststoffphase der vorletzten Fest-Flüssig-Trennstufe (9) und der letzten Fest-Flüssig-Trennstufe (10) des ersten Abschnitts (I) der Prozeßlinie vorgesehen ist.

27. Anlage nach einem der Ansprüche 21 bis 26, dadurch gekennzeichnet, daß die Fest-Flüssig-Trennstufen (6, 9, 10) des ersten Abschnitts (I) und die Fest-Flüssig-Trennstufe (11) des zweiten Abschnitts (II) der Prozeßlinie zumindest teilweise durch Zentrifugal-Separatoren und/oder Hydrozyklone gebildet sind.

28. Anlage nach Anspruch 27, dadurch gekennzeichnet, daß die Zentrifugal-Separatoren zumindest teilweise durch Dekanter (6, 9, 10, 11) gebildet sind.

29. Anlage nach Anspruch 21, dadurch gekennzeichnet, daß die Leitung (7) zur Abführung der von der ersten Fest-Flüssig-Trennstufe (6) des ersten Abschnitts (I) der Prozeßlinie abgetrennten flüssigen Phase zu einer Koagulationseinrichtung zur Koagulation der Proteine führt.

30. Anlage nach Anspruch 29, dadurch gekennzeichnet, daß die Koagulationseinrichtung wenigstens drei Behälter (23, 24, 25) aufweist, zu denen jeweils eine Leitung (7a) zur Zufuhr einer Säure zur Koagulation der Proteine führt, wobei die drei Behälter (23, 24, 25) jeweils getrennt mit der flüssigen Phase der ersten Fest-Flüssig-Trennstufe (6) des ersten Abschnitts (I) der Prozßlinie füllbar, mit der Säure versetzbar und leerbar sind.

31. Anlage nach Anspruch 30, dadurch gekennzeichnet, daß wenigstens eine Fest-Flüssig-Trennstufe (27) zur Abtrennung der koagulierten Proteine vorgesehen ist.

32. Anlage nach Anspruch 31, dadurch gekennzeichnet, daß ein Sedicanter (28) (eingetragene Marke der Firma Flottweg GmbH) vorgesehen ist, in dem die flüssige Phase der Fest-Flüssig-Trennstufe (27) in eine Phase höherer und eine Phase niedrigerer Dichte getrennt wird.

33. Anlage nach einem der Ansprüche 21 bis 32, dadurch gekennzeichnet, daß die Trennstufe zur Abtrennung der Fasern von der Stärke in dem zweiten Abschnitt (II) der Prozeßlinie durch ein Strahlwaschsieb (19, 21) gebildet wird.

34. Anlage nach Anspruch 33, dadurch gekennzeichnet, daß ein Sieb (22) vorgesehen ist, dem die von dem wenigstens einen Waschstrahlsieb (19, 21) abgetrennte flüssige Phase zugeführt wird.

## Claims

1. A process for obtaining starch and proteins from the flour of legumes, wherein the legume flour mashed with an aqueous means of dissolution is continuously fed to a first section (I) of a process line, having several solid/liquid separating stages (6, 9, 10) for extracting the proteins, and thereafter the solid state phase, suspended in water, of the previous solid/liquid separating stage (10) of said first section (I) is continuously fed to a second section (II) of said process line, having at least one separating stage (19, 21, 22) for separating the fiber from the starch and at least one solid/liquid separating stage (11) for separating the starch from the liquid phase, characterized in that said aqueous means of dissolution is formed from an alkaline concentrate (B) and said liquid phase separated from the starch in the second section (11) of said process line, and said alkaline concentrate (B) and the liquid phase separated from the starch in said second section (II) of said process line is fed to said first section (I) of said process line between the first and the last solid/liquid separation stage (6 and 10, respectively) thereof, said liquid phase separated from each subsequent solid/liquid separating stage (9, 10) of said first section (I) being fed as a countercurrent for suspending the solid state phase fed to said previous solid/liquid separating stage (6, 9), and said liquid phase separated from said first solid/liquid separating stage (6) of said first section (I) being discharged from the process line for separating the proteins.

2. The process as defined in claim 1, characterized in that the legume flour fed to said process line is subsequently mashed in several containers (1, 2).

3. The process as defined in claims 1 or 2, characterized in that the legume flour is mashed using a ratio of between 2 to 4 weight units of an aqueous means of dissolution per weight unit of said legume flour.

4. The process as defined in any one of the preceding claims, characterized in that the alkaline concentrate (R) is fed between the next-to-last and the last solid/liquid separating stages (9 and 10) of the first section (I) of said process line.

5. The process as defined in any one of the preceding claims, characterized in that the aqueous means of dissolution between said next-to-last and said last solid/liquid separating stages (9, 10) of the first section (I) of said process line has a pH value of between 8 to 11.

6. The process as defined in any one of the preceding claims, characterized in that an aqueous solution of caustic soda is used as said alkaline concentrate (B).

7. The process as defined in claim 6, characterized in that the concentration of caustic soda in said aqueous means of dissolution between said next-to-last and said last solid/liquid separating stages (9, 10) of the first section (1) is less than 10 mmol/l.

8. The process as defined in any one of the preceding claims, characterized in that the liquid phase separated from the starch in the second section (II) of said process line is fed between said next-to-last and said last solid/liquid separating stages (9, 10).

9. The process as defined in claim 1, characterized in that the solid state phase containing starch and fiber, mixed with the aqueous alkaline concentrate and diluted with the liquid phase separated in the second section (II) of said process line, is fed to a reaction vessel (14) in order to bring the remaining proteins into solution by extending the reaction time.

10. The process as defined in claim 9, characterized in that the suspension in said reaction vessel (14) is fed to the last solid/liquid separation stage (10) of the first section (I) of said process line.

11. The process as defined in any one of the preceding claims, characterized in that the viscosity of the protein-containing liquid phase of said first solid/liquid separation stage (6) of the first section (I) has a maximum value of 500 cP.

12. The process as defined in any one of the preceding claims, characterized in that the proteins are coagulated in order to be separated from the liquid phase of the first solid/liquid separation stage (6) of the first section (I) of said process line.

13. The process as defined in claim 12, characterized in that an acid is added to the liquid phase for coagulating the proteins.

14. The process as defined in claim 13, characterized in that the liquid phase is acidified by said acid at a pH value of between 3.5 and 5.

15. The process as defined in any one of claims 12 to 14, characterized in that the liquid phase is heated for coagulating the proteins.

16. The process as defined in claims 14 or 15, characterized in that at least one vessel (23, 24, 25) which is filled with the protein-containing liquid is provided for coagulating the proteins, wherein the acid for acidifying the liquid phase is added by metering as soon as said vessel is partially filled, said metering being carried out such that the desired pH value in the range of 3.5 to 5 will be reached in the filled vessel.

17. The process as defined in claim 16, characterized in that at least three vessels (23, 24, 25) are provided, said one vessel (23) being filled with the protein-containing liquid phase and acidified for coagulation while said second vessel (24) is left alone for maturing the coagulate and said third vessel (25) is being emptied.

18. The process as defined in any one of claims 12 to 17, characterized in that at least one solid/liquid separation stage (27) is provided for separating the coagulatd protein from said liquid phase.

19. The process as defined in claim 18, characterized in that the liquid phase of said solid/liquid separation stage (27) is fed to a Sedicanter (registered trademark of Flottweg GmbH) and the non-coagulated proteins are separated with the separated denser phase of the Sedicanter.

20. The process as defined in any one of the preceding claims, characterized in that pea flour is used as said legume flour.

21. An apparatus for carrying out the process as defined in any one of the preceding claims, characterized by means for mashing the legume flour with said aqueous means of dissolution, a process line having a first section (I) with several solid/liquid separation stages (6, 9, 10) for extracting the proteins, a container (17) for suspending the solid state phase of the last solid/liquid separation stage (10) of the first section (1) in water, a second section (II) of said process line with at least one separation stage (19, 21, 22) for separating the fiber from the starch, and at least one solid/liquid separation stage (11) for separating the starch from the liquid phase, a conduit for feeding an alkaline concentrate (B) and a conduit (11a) for feeding the liquid phase separated from the starch in the second section (II) of said process line to the first section (1) between the first solid/liquid separation stage thereof and the last solid/liquid separation stage (6, 10) thereof, conduits (3, 16) each for returning the liquid phase separated from the respective subsequent solid/liquid separation stage (9, 10) to the container (8; 1, 2) in which the solid state phase being fed to the preceding solid/liquid separation stage (6, 9) is suspended, as well as a conduit (7) for discharging the protein-containing liquid phase of the first solid/liquid separation stage (7) of said first section (I).

22. The apparatus as defined in claim 21, characterized in that said conduit (3) for returning the liquid phase separated from the second solid/liquid separation stage (9) of the first section (I) of said process line leads to the means (1, 2) for mashing the legume flour.

23. The apparatus as defined in claims 21 or 22, characterized in that a buffer container (5) is provided between said means for mashing the legume flour and the first solid/liquid separation stage (6) of the first section (I) of said process line.

24. The apparatus as defined in claims 22 or 23, characterized in that said means for mashing comprises several containers (1, 2) which can be separately filled with the legume flour (E) and the aqueous means of dissolution.

25. The apparatus as defined in any one of claims 21 to 24, characterized in that said conduit for feeding the alkaline concentrate (B) and the conduit (11a) for feeding the liquid phase separated in the second section (11) lead to a container (12) for suspending the solid material of the next-to-last solid/liquid separation stage (9) of the first section (I) of said process line.

26. The apparatus as defined in claim 25, characterized in that a reaction vessel (14) is provided between said container (12) for suspending the solid state phase of the next-to-last solid/liquid separation stage (9) and the last solid/liquid separation stage (10) of the first section (I) of said process line.

27. Tho apparatus as defined in any one of claims 21 to 26, characterized in that the solid/liquid separation stages (6, 9, 10) of the first section (I) and the solid/liquid separation stage (11) of the second section (II) of said process line are at least partially formed by centrifugal separators and/or hydrocyclones.

28. The apparatus as defined in claim 27, characteized in that said centrifugal separators are at least partially formed by decanters (6, 9, 10, 11).

29. The apparatus as defined in claim 21, characterized in that said conduit (7) for discharging the liquid phase separated from the first solid/liquid separation stage (6) of the first section (I) of said process line leads to coagulation means for coagulating the proteins.

30. The apparatus as defined in claim 29, characterized in that said coagulation means comprises at least three vessels (23, 24, 25) to each of which leads a conduit (7a) for feeding an acid for coagulating the proteins, wherein each of said three vessels (23, 24, 25) can be separately filled with the liquid phase of the first solid/liquid separation stage (6) of the first, section (I) of said process line, added with said acid and emptied.

31. The apparatus as defined in claim 30, characterised in that at least one solid/liquid separation stage (27) for separating the coagulated proteins is provided.

32. The apparatus as defined in claim 31, characterized in that a Sedicanter (28) (registered trademark of Flottweg GmbH) is provided in which the liquid phase of the solid/liquid separation stage (27) is separated into a phase of higher density and a phase of lower density.

33. The apparatus as defined in any one of claims 21 to 32, characterized in that the separation stage for separating the fiber from the starch in the second section (II) of said process line is formed by a jet washing sieve (19, 21).

34. The apparatus as defined in claim 33, characterized in that a sieve (22) is provided which is fed by the liquid phase separated from the at least one jet washing sieve (19, 21).

## Revendications

1. Procédé pour l'obtention d'amidon et de protéines à partir de la farine de légumes secs, dans lequel la farine de légumes secs mouillée avec un agent de dissolution aqueux est alimentée en continu dans une première section (I) d'une chaîne de processus avec plusieurs étages de séparation solide/liquide (6, 9, 10) pour l'extraction des protéines et ensuite la phase solide du dernier étage de séparation solide/liquide (10) de la première section (I) en suspension dans l'eau est alimentée en continu dans une deuxième section (II) de la chaîne de processus avec au moins un étage de séparation (19, 21, 22) pour séparer les fibres de l'amidon et au moins un étage de séparation solide/liquide (11) pour séparer l'amidon de la phase liquide, caractérisé en ce que l'agent de dissolution aqueux est formé à partir d'un concentré alcalin (B) et de la phase liquide séparée de l'amidon dans la deuxième section (II) de la chaîne de processus et le concentré alcalin (B) et la phase liquide séparée de l'amidon dans la deuxième section (II) est alimentée dans la première section (I) de la chaîne de processus entre le premier et le dernier étage de séparation de celle-ci (6 ou 10), la phase liquide séparée par l'étage de séparation solide/liquide en aval (9, 10) respectif de la première section (I) étant renvoyée à contre-courant pour mettre en suspension la phase solide alimentée dans l'étage de séparation solide/ liquide en amont (6, 9) et la phase liquide séparée par le premier étage de séparation solide/liquide (6) de la première section (I) étant évacuée de la chaîne de processus pour la séparation des protéines.

2. Procédé selon la revendication 1, caractérisé en ce que la farine de légumes secs alimentée dans la chaîne de processus est mouillée dans plusieurs récipients (1, 2) successivement.

3. Procédé selon la revendication 1 ou la revendication 2, caractérisé en ce que la farine de légumes secs est mouillée selon un rapport de 2 à 4 parties en poids d'agent de dissolution aqueux pour une partie en poids de farine de légumes secs.

4. Procédé selon l'une des revendications précédentes, caractérisé en ce que le concentré alcalin (B) est alimenté entre l'avant-dernier et le dernier étage de séparation solide/liquide (9 et 10) de la première section (I) de la chaîne de processus.

5. Procédé selon l'une des revendications précédentes, caractérisé en ce que l'agent de dissolution aqueux entre l'avant-dernier et le dernier étage de séparation solide/ liquide (9, 10) de la première section (I) de la chaîne de processus présente un pH de 8 à 11.

6. Procédé selon l'une des revendications précédentes, caractérisé en ce que l'on utilise comme concentré alcalin (B) une solution aqueuse de soude caustique.

7. Procédé selon la revendication 6, caractérisé en ce que la concentration de la soude caustique dans l'agent de dissolution aqueux entre l'avant-dernier et le dernier étage de séparation solide/liquide (9, 10) de la première section (I) de la chaîne de processus est inférieure à 10 mmol/l.

8. Procédé selon l'une des revendications précédentes, caractérisé en ce que la phase liquide séparée de l'amidon dans la deuxième section (II) de la chaîne de processus est alimentée dans la première section (I) entre l'avant-dernier et le dernier étage de séparation solide/liquide (9, 10).

9. Procédé selon la revendication 1, caractérisé en ce que la phase solide contenant de l'amidon et des fibres, mélangée avec le concentré alcalin aqueux et diluée avec la phase liquide séparée de l'amidon dans la deuxième section (II) de la chaîne de processus, est alimentée dans un réacteur (14) afin de mettre en solution les protéines résiduelles par allongement du temps de réaction.

10. Procédé selon la revendication 9, caractérisé en ce que la suspension dans le réacteur (14) est alimentée dans le dernier étage de séparation solide/liquide (10) de la première section (I) de la chaîne de processus.

11. Procédé selon l'une des revendications précédentes, caractérisé en ce que la viscosité de la phase liquide contenant les protéines du premier étage de séparation solide/liquide (6) de la première section (I) est au maximum de 500 cP.

12. Procédé selon l'une des revendications précédentes, caractérisé en ce que les protéines sont coagulées pour la séparation à partir de la phase liquide du premier étage de séparation solide/liquide (6) de la première section (I) de la chaîne de processus.

13. Procédé selon la revendication 12, caractérisé en ce que la phase liquide est mélangée avec un acide pour la coagulation des protéines.

14. Procédé selon la revendication 13, caractérisé en ce que la phase liquide est acidifiée avec l'acide à une valeur de pH dans la plage de 3,5 à 5.

15. Procédé selon l'une des revendications 12 à 14, caractérisé en ce que la phase liquide est chauffée pour la coagulation des protéines.

16. Procédé selon la revendication 14 ou la revendication 15, caractérisé en ce que, pour la coagulation des protéines, il est prévu au moins un récipient (23, 24, 25) qui est rempli avec la phase liquide contenant les protéines, l'acide pour l'acidification de la phase liquide étant ajouté de manière dosée dès que le récipient est en partie rempli et le dosage se faisant de façon que le pH souhaité dans la plage de 3,5 à 5 est atteint lorsque le récipient est plein.

17. Procédé selon la revendication 16, caractérisé en ce qu'il est prévu au moins trois récipients (23, 24, 25), l'un des récipients (23) étant rempli avec la phase liquide contenant les protéines et acidifié pour la coagulation, tandis que le deuxième récipient (24) est laissé à reposer pour la maturation du coagulum et le troisième récipient (25) est vidé.

18. Procédé selon l'une des revendications 12 à 17, caractérisé en ce qu'il est prévu au moins un étage de séparation solide/liquide (27) pour séparer la protéine coagulée de la phase liquide.

19. Procédé selon la revendication 18, caractérisé en ce que la phase liquide de l'étage de séparation solide/ liquide (27) est alimentée dans un Sedicanter (marque déposée de la société Flottweg GmbH) et les protéines non coagulées sont séparées avec la phase plus dense séparée du Sedicanter.

20. Procédé selon l'une des revendications précédentes, caractérisé en ce que l'on utilise comme farine de légumes secs de la farine de pois.

21. Installation pour la mise en oeuvre du procédé selon l'une des revendications précédentes, caractérisée par un dispositif de mouillage de la farine de légumes secs avec l'agent de dissolution aqueux, une chaîne de processus avec une première section (I) avec plusieurs étages de séparation solide/liquide (6, 9, 10) pour l'extraction des protéines, un récipient (17) pour la mise en suspension de la phase solide du dernier étage de séparation solide/liquide (10) de la première section (I) dans de l'eau, une deuxième section (II) de la chaîne de processus avec au moins un étage de séparation (19, 21, 22) pour séparer les fibres de l'amidon et au moins un étage de séparation solide/liquide (11) pour séparer l'amidon de la phase liquide, une conduite pour alimenter un concentré alcalin (B) et une conduite (11a) pour alimenter la phase liquide séparée de l'amidon dans la deuxième section (II) de la chaîne de processus dans la première section (I) entre le premier étage de séparation solide/liquide et le dernier étage de séparation solide/ liquide (6, 10) de celle-ci, respectivement une conduite (3, 16) pour renvoyer la phase liquide séparée de chaque étage de séparation solide/liquide en aval (9, 10) dans le récipient (8 ; 1, 2) dans lequel est mise en suspension la phase solide qui est alimentée dans l'étage de séparation solide/liquide en amont (6, 9), ainsi qu'une conduite (7) pour évacuer la phase liquide contenant les protéines du premier étage de séparation solide/liquide (7) de la première section (I).

22. Installation selon la revendication 21, caractérisée en ce que la conduite (3) pour renvoyer la phase liquide séparée par le deuxième étage de séparation solide/ liquide (9) de la première section (I) de la chaîne de processus conduit au dispositif (1, 2) pour le mouillage de la farine de légumes secs.

23. Installation selon la revendication 21 ou la revendication 22, caractérisée en ce qu'un récipient tampon (5) est disposé entre le dispositif de mouillage de la farine de légumes secs et le premier étage de séparation solide/liquide (6) de la première section (I) de la chaîne de processus.

24. Installation selon la revendication 22 ou la revendication 23, caractérisée en ce que le dispositif de mouillage présente plusieurs récipients (1, 2) pouvant être remplis et vidés séparément avec la farine de légumes secs (E) et l'agent de dissolution aqueux.

25. Installation selon l'une des revendications 21 à 24, caractérisée en ce que la conduite d'alimentation du concentré alcalin (B) et la conduite (11a) pour alimenter la phase liquide séparée dans la deuxième section (II) conduisent à un récipient (12) pour la mise en suspension du solide de l'avant-dernier étage de séparation solide/ liquide (9) de la première section (I) de la chaîne de processus.

26. Installation selon la revendication 25, caractérisée en ce qu'un réacteur (14) est prévu entre le récipient (12) pour la mise en suspension de la phase solide de l'avant-dernier étage de séparation solide/liquide (9) et le dernier étage de séparation solide/liquide (10) de la première section (I) de la chaîne de processus.

27. Installation selon l'une des revendications 21 à 26, caractérisée en ce que les étages de séparation solide/ liquide (6, 9, 10) de la première section (I) et l'étage de séparation solide/liquide (11) de la deuxième section (II) de la chaîne de processus sont formés au moins en partie par des séparateurs centrifuges et/ou des hydrocyclones.

28. Installation selon la revendication 27, caractérisée en ce que les séparateurs centrifuges sont formés au moins en partie par des décanteurs (6, 9, 10, 11).

29. Installation selon la revendication 21, caractérisée en ce que la conduite (7) pour évacuer la phase liquide séparée par le premier étage de séparation solide/liquide (6) de la première section (I) de la chaîne de processus conduit à un dispositif de coagulation pour coaguler les protéines.

30. Installation selon la revendication 29, caractérisée en ce que le dispositif de coagulation présente au moins trois récipients (23, 24, 25) auxquels conduit respectivement une conduite (7a) pour alimenter un acide pour la coagulation des protéines, les trois récipients (23, 24, 25) pouvant respectivement être remplis avec la phase liquide du premier étage de séparation solide/ liquide (6) de la première section (I) de la chaîne de processus, mélangés avec l'acide et vidés séparément.

31. Installation selon la revendication 30, caractérisée en ce qu'il est prévu au moins un étage de séparation solide/liquide (27) pour la séparation des protéines coagulées.

32. Installation selon la revendication 31, caractérisée en ce qu'il est prévu un Sedicanter (28) (marque déposée de la société Flottweg GmbH) dans lequel la phase liquide de l'étage de séparation solide/liquide (27) est séparée en une phase de densité plus élevée et une phase de densité plus basse.

33. Installation selon l'une des revendications 21 à 32, caractérisée en ce que l'étage de séparation pour séparer les fibres de l'amidon dans la deuxième section (II) de la chaîne de processus est formé par un tamis fin à jet (19, 21).

34. Installation selon la revendication 33, caractérisée en ce qu'il est prévu un tamis (22) auquel est amenée la phase liquide séparée par le tamis fin à jet (19, 21) au nombre de un au moins.
